# EUROPEAN PATENT APPLICATION

(11) **EP 4 572 491 A1**
(43) Date of publication of application: **18.06.2025**
(21) Application number: 23852259.3
(22) Date of filing: 26.06.2023
(51) Int. Cl.: H04W 72/20, H04W 16/28, H04W 72/0446, H04W 72/0457, H04W 92/20

(54) **NETWORK NODE, TERMINAL DEVICE, CONTROL METHOD, AND PROGRAM WHICH IMPROVE PRECISION OF CHANNEL ESTIMATION**

(30) Priority: 10.08.2022 JP 2022127710
(71) Applicant: KDDI Research, Inc., Fujimino-shi, Saitama 356-8502 (JP)
(72) Inventor: KAMIWATARI, Shunsuke, Fujimino-shi, Saitama 356-8502 (JP); OHSEKI, Takeo, Fujimino-shi, Saitama 356-8502 (JP); KANNO, Issei, Fujimino-shi, Saitama 356-8502 (JP); AMANO, Yoshiaki, Fujimino-shi, Saitama 356-8502 (JP)
(74) Representative: Mathys & Squire
(86) International application number: PCT/JP2023/023533
(87) International publication number: WO 2024/034275

(57) **Abstract**

A network node in a wireless communication network that provides a communication service to a terminal device having a plurality of antennas with use of a plurality of transmission reception points determines, based on a result of measuring, at the plurality of transmission reception points, a reception quality of a sounding reference signal (SRS) transmitted from each of the plurality of antennas of the terminal device, settings of the SRS including a setting of whether the SRS is to be transmitted with a plurality of sets of resources corresponding to sets of time resources different from each other, and notifies the settings of the SRS to the terminal device, using one of the plurality of transmission reception points.

## Description

### TECHNICAL FIELD

The present invention relates to a technology for improving channel estimation accuracy in wireless communication.

### BACKGROUND ART

Time division duplexing (TDD) is a known duplexing method used in cellular communication systems. In TDD, communication is performed by assigning different time slots in the same frequency channel to communication on an uplink (link on which signals are transmitted from a terminal device to a network node (base station device)) and a downlink (link on which signals are transmitted from the network node to the terminal device). Since TDD uses the same frequency channel for the uplink and the downlink, channel estimation values obtained on the network side based on a sounding reference signal (SRS) of the uplink can be used in communication on the downlink, for example.

### SUMMARY OF INVENTION

### TECHNICAL PROBLEM

On the downlink, signals can be transmitted from a plurality of transmission reception points provided by one or more network nodes to one terminal device. In order to efficiently perform such signal transmission on the downlink, it is important that channel estimation between each of the plurality of transmission reception points and the plurality of antennas of the terminal device is performed with high accuracy.

### SOLUTION TO PROBLEM

The present invention provides a technology for improving the accuracy of channel estimation between a transmission reception point and a terminal device.

A network node according to one aspect of the present invention is a network node in a wireless communication network that provides a communication service to a terminal device having a plurality of antennas with use of a plurality of transmission reception points, the network node comprising: determination means for determining, based on a result of measuring, at the plurality of transmission reception points, a reception quality of a sounding reference signal (SRS) transmitted from each of the plurality of antennas of the terminal device, settings of the SRS including a setting of whether the SRS is to be transmitted with a plurality of sets of resources corresponding to sets of time resources different from each other; and notification means for notifying the settings of the SRS to the terminal device, using one of the plurality of transmission reception points.

A network node according to another aspect of the present invention is a network node in a wireless communication network including the network node which communicates with a terminal device having a plurality of antennas with use of one or more of a plurality of transmission reception points, and another network node that communicates with the terminal device with use of another one or more of the plurality of transmission reception points different from the one or more transmission reception points, the network node comprising: acquisition means for acquiring a result of measuring, at the one or more of the plurality of transmission reception points, a reception quality of a sounding reference signal (SRS) transmitted from each of the plurality of antennas of the terminal device; and transmission means for transmitting, to the other network node, information related to the result of measuring the reception quality of the SRS at the one or more of the plurality of transmission reception points, the information being for causing the other network node to determine settings of the SRS including a setting of whether the SRS is to be transmitted with a plurality of sets of resources corresponding to sets of time resources different from each other.

A terminal apparatus according to one aspect of the present invention is a terminal device in a wireless communication network that provides a communication service to the terminal device with use of a plurality of transmission reception points, the terminal device comprising: a plurality of antennas; reception means for receiving, from a network node of the wireless communication network, settings of a sounding reference signal (SRS) for measurement at each of the plurality of transmission reception points including a setting of whether the SRS is to be transmitted with a plurality of sets of resources corresponding to sets of time resources different from each other; and transmission means for transmitting the SRS with use of the plurality of antennas, based on the settings of the SRS.

### ADVANTAGEOUS EFFECTS OF INVENTION

According to the present invention, the accuracy of channel estimation between a transmission reception point and a terminal device can be improved.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram showing an example configuration of a wireless communication network.
FIG. 2A is a diagram showing an overview of processing.
FIG. 2B is a diagram showing an overview of processing.
FIG. 3 is a diagram showing an example hardware configuration of a device.
FIG. 4 is a diagram showing an example functional configuration of a network node.
FIG. 5 is a diagram showing an example functional configuration of a terminal device.
FIG. 6 is a diagram showing an example of the flow of processing that is executed in the wireless communication network.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### Network Configuration

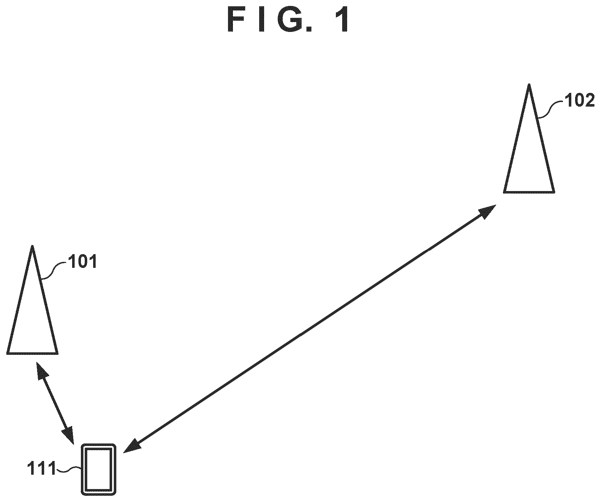

FIG. 1 shows an example configuration of a wireless communication network according to the present embodiment. The wireless communication network is constituted to include a plurality of transmission reception points (TRPs) 101 and 102 disposed in a geographically distributed manner and a terminal device 111 that communicates with a network via the plurality of transmission reception points. The transmission reception points 101 and 102 are constituted to each include one or more antennas. Also, the transmission reception points 101 and 102 can be connected to one network node. That is, one network node can be configured to communicate with the terminal device 111 via a plurality of geographically distributed transmission reception points. Note that this is merely an example, and the transmission reception points 101 and 102 may be connected to different network nodes. In this case, a first network node connected to the first transmission reception point 101 and a second network node connected to the second transmission reception point 102 cooperate to provide a wireless communication service to the terminal device 111.

The quality of the wireless communication service in such a wireless communication system depends on the accuracy of the channel estimation values between antennas of the terminal device 111 and the antennas included in the plurality of transmission reception points 101 and 102. Here, in the present embodiment, assuming that time division duplexing (TDD) is used, channel estimation can be performed by the radio quality of a sounding reference signal (SRS) that is transmitted from the terminal device 111 being measured at each antenna of the plurality of transmission reception points. This is because, in TDD, the same frequency channel is used for the downlink on which signals are transmitted from the transmission reception points to the terminal device 111 and the uplink on which signals are transmitted from the terminal device 111 to the transmission reception points.

The SRS is, for example, transmitted by arranging a known sequence in frequency resources that are at predetermined intervals between the terminal device 111 and the transmission reception point, in one set of time resources (set of time resources consisting of one or more resource elements). At this time, the SRS is, for example, transmitted using a different sequence for each antenna of the terminal device 111. That is, when the terminal device 111 has four antennas, for example, an SRS of a different sequence is transmitted in each of the four antennas. In this way, the SRSs are multiplexed (code division multiplexed) and transmitted in a power direction using different sequences at the same time and with the same frequency resources. At a transmission reception point, the SRS can be detected using the sequences corresponding to the antennas of the terminal device 111, and channel estimation between each antenna of the terminal device 111 and the transmission reception point can be performed. Note that, in the case where the transmission reception point has a plurality of antennas, channel estimation between each of these plurality of antennas and each antenna of the terminal device 111 is performed.

Here, a large number of sequences are multiplexed in the power direction when the total number of antennas in the terminal device 111 increases, and thus the power per sequence may no longer be sufficient. At this time, at a transmission reception point located away from the terminal device 111, such as the transmission reception point 102 of FIG. 1, for example, the SRS cannot be received with sufficient power, and the channel estimation accuracy can also be insufficient.

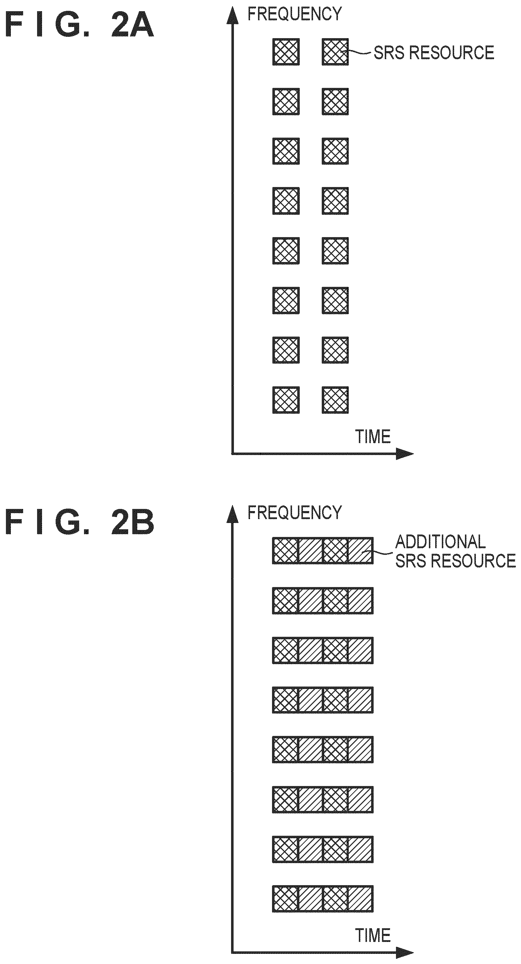

In the present embodiment, in view of such circumstances, when the power of the SRS is insufficient, for example, the SRS is transmitted with a plurality of sets of resources corresponding to different time resources. For example, it is assumed that the terminal device 111 is transmitting the SRS with a set of resources consisting of two resource elements in the time direction and a predetermined number of resource elements in the frequency direction, as shown in FIG. 2A. In this state, when it is determined that the power of the SRS is insufficient in the transmission reception point 102, for example, another set of resources that are not transmitting an SRS are used as additional resources for SRS transmission in the time direction, as shown in FIG. 2B. The terminal device 111 then, for example, transmits the SRS corresponding to one or more of the antennas with the additional resources for SRS transmission, and stops transmission of the SRS corresponding to those one or more antennas with the resources for SRS transmission that have been used from the beginning. This enables the number of sequences that are multiplexed in SRSs that are transmitted at the same time to be reduced, thereby enabling the transmission power of the SRS per sequence to be increased. By increasing the transmission power of the SRS per sequence, the power of the SRS that is received at the transmission reception points can be improved, and, as a result, it becomes possible to execute channel estimation with high accuracy.

In order to execute such processing, a network node that is connected to a transmission reception point and controls communication through the transmission reception point determines the settings of the SRS, based on the result of measuring the reception quality (e.g., reception power, signal-to-noise ratio, etc.) of the SRS at a plurality of transmission reception points. The SRS settings referred to here include a setting of whether to transmit the SRS in a distributed manner with a plurality of resource sets corresponding to sets of time resources that are different from each other. The network node then notifies the determined SRS settings to the terminal device 111. Note that it can be assumed that the network node is connected to all of the plurality of transmission reception points, and that communication at these transmission reception points is controlled. In this case, the network node notifies the SRS settings to the terminal device 111 and then observes the SRS in accordance with the settings.

On the other hand, when a network node is only connected to one or more of the plurality of transmission reception points and another network node is connected to another one or more of the plurality of transmission reception points, the network node notifies the SRS settings to not only the terminal device 111 but also the other network node. This enables the other network node to observe the SRS from the terminal device 111 based on the notified SRS settings, at the other one or more of the transmission reception points described above. Also, when determining the SRS settings, the network node can receive, from the other network node, information related to an SRS measurement result acquired at the other one or more of the transmission reception points connected to the other network node. The network node then determines the SRS settings, based on the result of measuring the reception quality of the SRS at the one or more of the plurality of transmission reception points to which the network node is connected and the information related to the SRS measurement result received from the other network node.

Note that the information related to the SRS measurement result can, for example, be change instruction information of the SRS settings that is based on the result of measuring the reception quality of the SRS at a transmission reception point connected to the other network node. For example, if the reception quality of the SRS is less than or equal to a predetermined level at a transmission reception point connected to the other network node, change instruction information of the SRS settings for ensuring that the SRS is transmitted with a plurality of sets of resources corresponding to different times can be notified to the network node from the other network node. That is, the other network node can acquire the result of measuring the reception quality of the SRS at a corresponding transmission reception point, and, if the value of the measurement result is less than or equal to a predetermined level, for example, can determine that additional resources for SRS transmission whose timing is different from the resources for SRS transmission currently in use should be used, as shown in FIG. 2B. The other network node can then generate change instruction information indicating that determination and transmit the change instruction information to the network node. Also, in the case where, for example, the reception quality of the SRS greatly exceeds the predetermined level at a transmission reception point connected to the other network node, and the SRS is being transmitted with a plurality of sets of resources corresponding to different times, change instruction information of the SRS settings for ensuring that the SRS transmitted with the plurality of sets of resources is transmitted with fewer sets of resources can be notified to the network node from the other network node. When this change instruction information of the SRS settings is received, the network node can determine the SRS settings in accordance with that change instruction information. When the SRS is being transmitted with a resource arrangement such as is shown in FIG. 2A, for example, the network node, upon receiving change instruction information indicating that the SRS is to be transmitted with a plurality of sets of resources respectively corresponding to different times, can change the SRS settings, such that the SRS is transmitted with a resource arrangement such as is shown in FIG. 2B. Also, when the SRS is being transmitted with a resource arrangement such as is shown in FIG. 2B, for example, the network node, upon receiving change instruction information indicating that the SRS is to be transmitted with one set of resources, can change the SRS settings, such that the SRS is transmitted with a resource arrangement such as is shown in FIG. 2A.

Note that the change instruction information may, for example, be information for instructing that the settings should be changed, such that the power of the SRS is improved by a predetermined level. For example, it is assumed that the other network node uses change instruction information to notify the network node that the reception power of the SRS should be improved by 3 dB. In this case, the network node determines the SRS settings, such that the number of sequences of SRSs that are transmitted at the same timing is halved and the SRSs of the remaining sequences are transmitted at another timing, for example. By halving the number of sequences of SRSs that are transmitted at one time, the transmission power for each sequence can be doubled. As a result, the reception power of the SRS at a transmission reception point corresponding to the other network node can be improved by 3 dB.

Also, the information related to the SRS measurement result can be information indicating the result of measuring the reception quality of the SRS at a transmission reception point connected to another network node. Upon receiving this information, the network node determines the settings of the SRS, based on at least one of a first measurement result relating to the reception quality of the SRS at a transmission reception point connected to the network node and a second measurement result relating to the reception quality of the SRS at a transmission reception point connected to the other network node indicated by the received information. For example, if the second measurement result is lower than a predetermined value, the network node can determine the SRS settings, so to reduce the number of sequences of SRSs that are transmitted at one time, as shown in FIG. 2B. Also, the network node may also determine the SRS settings, so as to reduce the number of sequences of SRSs that are transmitted at one time, when the difference between the first measurement result and the second measurement result (absolute value of difference) exceeds a predetermined value. The predetermined value can, for example, be a value such as 3 dB, 6 dB, 10 dB, or the like.

The terminal device 111 uses designated radio resources to transmit the SRSs of sequences associated with those radio resources, in accordance with the SRS settings determined as described above. Here, the terminal device 111 is assumed to have a total of four antennas. At this time, when, for example, SRS settings such as for transmitting SRSs of a total of four sequences corresponding to respective antennas are used in a set of resources such as is shown in FIG. 2A, the terminal device 111 generates SRSs corresponding to respective antennas using the four sequences, in accordance with the settings, and transmits the generated SRSs using common frequency and time resources. It is assumed that, thereafter, SRS settings such as for transmitting SRSs respectively corresponding to two antennas are configured, using a plurality of sets of resources having different timings such as is shown in FIG. 2B, for example. In this case, the terminal device 111 transmits, from the corresponding antennas, SRSs respectively generated using two sequences corresponding to two antennas, with a set of resources whose timing is earlier, in accordance with the above settings. Also, the terminal device 111 transmits, from the corresponding antennas, SRSs respectively generated using two sequences corresponding to the remaining two antennas, with a set of resources whose timing is later.

As described above, by extending the settings of resources for SRS transmission, the SRS is distributed such that the SRS transmission timing based on one or more of the sequences differs from the SRS transmission timing based on another one or more of the sequences, thereby enabling improvement in the reception quality of the SRS at transmission reception points of the network and improvement in the channel estimation accuracy.

Note that, in the above-described example configuration, an example in which a network node connected to a transmission reception point determines the SRS settings is described, but similar processing to the above-described processing can be performed with any suitable configuration. For example, the transmission reception points may function as the network nodes described above. In this case, the transmission reception points may cooperate with each other to determine the SRS settings to be used in the terminal device in the manner described above. Also, a higher order node than the network nodes may determine the SRS settings to be used in the terminal device. In this case, the result of measuring the reception quality of the SRS at each antenna of each transmission reception point can be aggregated in the higher-order node, and the higher-order node can determine the SRS settings to be used in the terminal device, based on the aggregated information. Also, in the above-described example, an example of processing in which four antennas are divided into groups of two antennas each and the transmission timings of the corresponding SRSs differ is described, but the present invention is not limited thereto. For example, the four antennas may be divided into a group of one antenna and a group of three antennas, or into three or more groups, such as groups of one antenna, one antenna, and two antennas, and the SRS settings may be determined such that SRSs corresponding to the antennas belonging to each group are transmitted at different timings. Also, in the above-described embodiment, the case where a plurality of transmission reception points are used is described, but the above-described processing may be executed in order to improve the accuracy of channel estimation at one transmission reception point. In this way, the above-described processing can be executed in modes in which various modifications are applied. Also, the above-described processing can be used in any suitable combination.

### Device Configuration

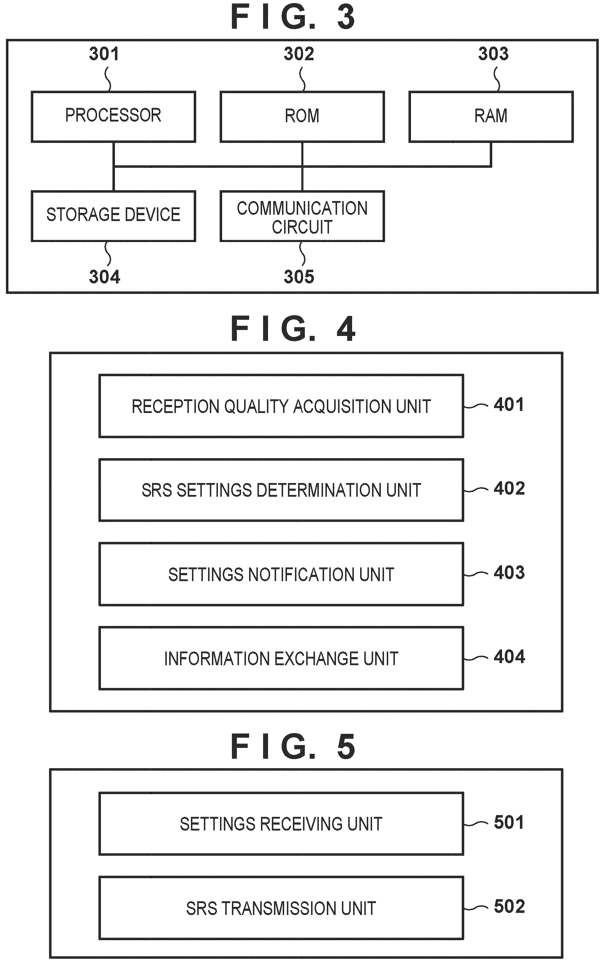

An example hardware configuration of a network node (e.g., base station device) and a terminal device will be described using FIG. 3. The network node and the terminal device are, in one example, constituted to include a processor 301, a ROM 302, a RAM 303, a storage device 304, and a communication circuit 305. The processor 301 is a computer constituted to include one or more processing circuits such as a general-purpose CPU (central processing unit) and an ASIC (application-specific integrated circuit), and executes overall processing of the device and the various processing described above, by reading out and executing programs stored in the ROM 302, the storage device 304, or the like. The ROM 302 is a read-only memory that stores information such as programs and various parameters relating to processing that is executed by the network node and the terminal device. The RAM 303 is a random access memory that functions as a workspace when the processor 301 executes programs and also stores temporary information. The storage device 304 is constituted by, for example, a removable external storage device. The communication circuit 305 is constituted by, for example, a wireless communication circuit for 5G applications, next-generation applications, and the like. Note that, in FIG. 3, one communication circuit 305 is illustrated, but the network node and the terminal device can have a plurality of communication circuits. For example, the network node and the terminal device can have a wireless communication circuit and common antenna for 5G applications, next-generation applications, and the like. Note that the network node and the terminal device may separately have an antenna for 5G applications and an antenna for next-generation applications. Also, the terminal device may have a communication circuit for other wireless communication networks such as a wireless LAN. Note that the network node and the terminal device may have a separate communication circuit 305 for each of a plurality of available frequency bands or may have a common communication circuit 305 for at least some of the frequency bands. Also, the network node can further have a wired communication circuit that is used when communicating with other network nodes or nodes of a core network. Note that a configuration may be adopted in which the network nodes have a wired communication circuit for wired communication with transmission reception points and do not have a wireless communication circuit. That is, a configuration may be adopted in which the transmission reception points are provided with a wireless communication function, and the network nodes are not involved in wireless communication processing.

FIG. 4 shows an example functional configuration of a network node. The network node has, for example, a reception quality acquisition unit 401, an SRS settings determination unit 402, a settings notification unit 403, and an information exchange unit 404 as functions thereof. Note that, in FIG. 4, only functions particularly related to the present embodiment are shown, and illustration of various other functions that the network node can have is omitted. For example, the network node naturally has other functions that 5G and next-generation network nodes typically have. Also, the functional blocks of FIG. 4 are schematically shown, and the individual functional blocks may be realized in an integrated manner or may be further subdivided. Also, the functions of FIG. 4 may be realized, for example, by the processor 301 executing a program stored in the ROM 302, the storage device 304, or the like, or, for example, by a processor present inside the communication circuit 305 executing predetermined software. Note that the processing that is executed by the functional units will not be described in detail here, and the general functions will only be outlined.

The reception quality acquisition unit 401 acquires, from a transmission reception point connected to the network node of the reception quality acquisition unit 401, information on the reception quality measurement result of measuring the SRS transmitted from the terminal device at the transmission reception point. Note that a configuration may be adopted in which the transmission reception points only perform frequency conversion, for example, on received radio signals and transfer the resultant radio signals to the network node. In this case, the reception quality acquisition unit 401 may perform SRS measurement, based on the radio signal transferred thereto, and acquire the result of SRS reception quality measurement. Note that the SRS reception quality can be acquired as the magnitude of the channel estimation value (absolute value of channel estimation value) at each transmission reception point or as the squared value of the channel estimation value. Also, the SRS reception quality may also be represented by another metric such as the signal-to-noise ratio, for example. The network node can, if necessary, provide information indicating the SRS reception quality measurement result to another network node with the information exchange unit 404.

The SRS settings determination unit 402 determines the SRS settings to be used by the terminal device, based on the SRS reception quality acquired by the reception quality acquisition unit 401. For example, when the SRS reception quality acquired by the reception quality acquisition unit 401 is below a predetermined level, the SRS settings determination unit 402 can determine the settings to reduce the number of sequences of SRSs to be transmitted at one time and increase the transmission power of the SRS per sequence. Also, when the SRS reception quality acquired by the reception quality acquisition unit 401 sufficiently exceeds the predetermined level, the SRS settings determination unit 402 can determine the settings so as to increase the number of sequences of SRSs to be transmitted at one time and reduce the radio resources with which the SRS is transmitted. Note that the SRS settings determination unit 402 designates a sequence to be used in generating the SRS, for each antenna included in the terminal device 111. Note that sequences corresponding to SRSs that are transmitted at the same time need to be different from each other, but sequences corresponding to SRSs transmitted at different timing may be the same. Also, the SRS settings determination unit 402 may acquire a second result of SRS reception quality measurement at a transmission reception point corresponding to another network node with the information exchange unit 404, and may determine the SRS settings, based on the first reception quality measurement result acquired by the reception quality acquisition unit 401 and the received second measurement result. In one example, the SRS settings determination unit 402 can determine the SRS settings so as to reduce the number of sequences of SRSs that are transmitted at one time, in order to improve the reception quality of SRSs with lower reception quality, when the difference between the first measurement result and the second measurement result exceeds a predetermined value. Also, the SRS settings determination unit 402 can determine to, for example, reduce the number of sequences of SRSs that are transmitted at one time, based on the reception quality measurement result acquired by the reception quality acquisition unit 401, and generate change instruction information indicating the contents of that determination. Also, the SRS settings determination unit 402 may generate change instruction information including information indicating how much the reception quality should be improved, based on the reception quality measurement result acquired by the reception quality acquisition unit 401. The change instruction information can then be transmitted to the other network node by the information exchange unit 404.

The settings notification unit 403 notifies the SRS settings determined in the SRS settings determination unit 402 to the terminal device. The settings notification unit 403 can transmit the determined SRS settings to the terminal device with a radio resource control (RRC) message, for example. Also, for example, a configuration may be adopted in which the settings notification unit 403 transmits a plurality of SRS settings to the terminal device beforehand with an RRC message, and, thereafter, transmits information designating which of the plurality of SRS settings to use with downlink control information (DCI). With such a configuration, it becomes possible for the network node to easily and quickly cause the terminal device to change the SRS settings, according to the communication situation. Also, the settings notification unit 403 can notify the SRS settings that are finally determined to the other network node, via the information exchange unit 404, for example.

The information exchange unit 404 exchanges information with other network nodes as described above. Note that the information exchange unit 404 aggregates information on a network node connected to a transmission reception point that provides a serving cell for the terminal device. The network node on which the information is aggregated determines the final SRS settings and notifies the SRS settings that are finally determined to the terminal device or other network nodes. Note that the information exchange unit 404 can exchange information with other network nodes via an Xn interface, an NG interface or the like.

FIG. 5 shows an example functional configuration of a terminal device. The terminal device has, for example, a settings receiving unit 501 and an SRS transmission unit 502 as functions thereof. Note that, in FIG. 5, only functions particularly related to the present embodiment are shown, and illustration of various other functions that the terminal device can have is omitted. For example, the terminal device naturally has other functions that 5G and next-generation terminal devices typically have. Also, the functional blocks of FIG. 5 are schematically shown, and the individual functional blocks may be realized in an integrated manner or may be further subdivided. Also, the functions of FIG. 5 may be realized, for example, by the processor 301 executing a program stored in the ROM 302, the storage device 304, or the like, or, for example, by a processor present inside the communication circuit 305 executing predetermined software. Note that the processing that is executed by the functional units will not be described in detail here, and the general functions will only be outlined.

The settings receiving unit 501 receives the SRS settings from a network node that provides a serving cell. These SRS settings can be received, by a radio resource control (RRC) message, for example. Also, for example, a configuration may be adopted in which the settings receiving unit 501 receives a plurality of SRS settings beforehand with an RRC message, and receives information designating which of the plurality of SRS settings to use with downlink control information (DCI). The SRS transmission unit 502 transmits the SRS, using the settings received by the settings receiving unit 501.

### Processing Flow

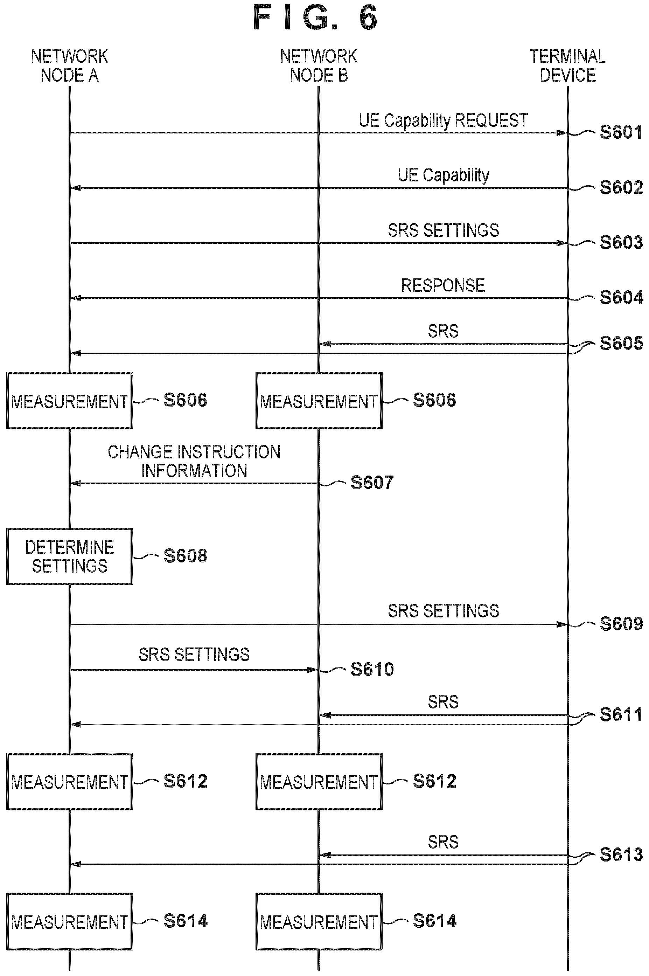

Next, an example of the flow of processing executed in the wireless communication network will be described using FIG. 6. Note that since the details of the processing steps described here are as described above, the processing flow will only be summarized here. Note that, here, the case where two network nodes (network node A, network node B) correspond to different transmission reception points will be described. Also, here, the network node A provides the serving cell.

First, the SRS settings are configured between the network node A and a terminal device, in a similar manner to conventional processing. First, the network node A requests the terminal device to transmit capability information (UE capability) (step S601). The terminal device transmits the UE capability to the network node A, in response to this request (step S602). The UE capability referred to here includes, for example, information on the number of antennas of the terminal device 111. In one example, the terminal device 111 notifies the network node A that the terminal device has four antennas. The network node A determines initial SRS settings, based on the received UE capability, and notifies the settings to the terminal device (step S603). The SRS settings referred to here are, for example, SRS settings such as for transmitting a corresponding SRS from each of the four antennas of the terminal device 111 at the same timing, as shown in FIG. 2A. Also, the SRS settings can be notified to the terminal device from the network node A, using RRC signaling, for example. Upon receiving these SRS settings, the terminal device notifies a response message for indicating that the settings information was successfully received to the network node A (step S604). Initial SRS setting is thereby completed.

The terminal device 111 generates an SRS corresponding to each antenna and transmits the generated SRS from the corresponding antenna, using the same set of frequency and time resources, in accordance with the settings notified in step S603 (step S605). The network node A and the network node B measure the SRS transmitted from each antenna of the terminal device 111, at antennas of the transmission reception points respectively connected to the network node A and the network node B (step S606). The network node A and the network node B perform channel estimation based on this SRS and measure the reception quality of the SRS. Note that the SRS reception quality measurement result may be acquired by appropriating the channel estimation result, such as the absolute value of the channel estimation value.

Here, it is assumed that the result of measuring the reception quality of the SRS in the network node B was insufficient for high-accuracy channel estimation. In this case, in one example, the network node B notifies change instruction information for notifying the network node A providing the serving cell that the settings should be changed (step S607). This notification can, for example, be performed using an Xn interface or an NG interface. Note that the network node B may notify the network node A of the result of SRS reception quality measurement, and whether the SRS settings should be changed may be determined in the network node A. Also, rather than notifying that the settings should be changed, the network node B may notify the network node A that, for example, a 3dB improvement in reception quality is required. The network node A determines whether the SRS settings should be changed, based on the SRS reception quality acquired by the network node A and the information notified from the network node B. Here, the network node A can determine to reduce the number of sequences of SRSs that are transmitted at one time and determine to use settings such as is shown in FIG. 2B (step S608). The network node A then notifies the determined SRS settings to the terminal device (step S609). The notification of SRS settings information referred to here may be performed using an RRC message or using a message in another format such as DCI. Note that the network node A also notifies the determined SRS settings to the network node B (step S610). This notification can, for example, be performed using an Xn interface or an NG interface.

Thereafter, the terminal device transmits an SRS corresponding to each of one or more of the antennas, using the notified SRS settings (step S611), and the network node A and the network node B perform channel estimation and reception quality measurement using this SRS (step S612). Also, the terminal device transmits an SRS corresponding to each of the remaining antennas with respect to which an SRS was not transmitted in step S611, using the notified SRS settings (step S613), and the network node A and the network node B perform channel estimation and reception quality measurement using this SRS (step S614). By using such SRS settings, the transmission power per sequence increases, and thus the reception quality of the SRS at the transmission reception point improves. The accuracy of channel estimation between each antenna of the terminal device and the antennas of the transmission reception points can thereby be improved.

As described above, in the present embodiment, by extending the settings of resources for SRS transmission, the SRSs are distributed such that the SRS transmission timing based on one or more of the sequences differs from the SRS transmission timing of another one or more of the sequences. The reception quality of the SRS at transmission reception points of the network can thereby be improved, and the channel estimation accuracy can be improved. Therefore, it is possible to contribute to Goal 9 of the United Nations' Sustainable Development Goals (SDGs), "Build resilient infrastructure, promote sustainable industrialization, and foster innovation".

The invention is not limited to the foregoing embodiments, and various variations/changes are possible within the spirit of the invention.

The present application claims priority to Japanese Patent Application No. 2022-127710 filed on August 10, 2022, and the entire content thereof is incorporated herein by reference.

## Claims

1. A network node in a wireless communication network that provides a communication service to a terminal device having a plurality of antennas with use of a plurality of transmission reception points, the network node comprising:
determination means for determining, based on a result of measuring, at the plurality of transmission reception points, a reception quality of a sounding reference signal (SRS) transmitted from each of the plurality of antennas of the terminal device, settings of the SRS including a setting of whether the SRS is to be transmitted with a plurality of sets of resources corresponding to sets of time resources different from each other; and
notification means for notifying the settings of the SRS to the terminal device, using one of the plurality of transmission reception points.

2. The network node according to claim 1,
wherein the network node communicates with the terminal device with use of one or more of the plurality of transmission reception points,
another network node different from the network node communicates with the terminal device with use of another one or more of the plurality of transmission reception points different from the one or more transmission reception points,
the network node further comprises:
acquisition means for acquiring a result of measuring a reception quality of the SRS at the one or more of the plurality of transmission reception points; and
reception means for receiving, from the other network node, information related to a result of measuring a reception quality of the SRS at the other one or more of the plurality of transmission reception points, and
the determination means determines the settings of the SRS, based on at least one of the result of measuring the reception quality of the SRS at the one or more of the plurality of transmission reception points and the information.

3. The network node according to claim 2,
wherein the information is change instruction information for instructing to change the settings of the SRS from the other network node that is based on the result of measuring the reception quality of the SRS at the other one or more of the plurality of transmission reception points, and
the determination means determines, when the information is received, the settings of the SRS in accordance with the change instruction information.

4. The network node according to claim 3,
wherein, when the change instruction information is received while the SRS for measuring the reception quality of the SRS at the one or more of the plurality of transmission reception points and the SRS for measuring the reception quality of the SRS at the other one or more of the plurality of transmission reception points are being transmitted with the same time resources, the determination means determines the settings of the SRS such that the SRS corresponding to one or more of the plurality of antennas of the terminal device is transmitted with different time resources from the SRS of another one or more of the plurality of antennas.

5. The network node according to claim 2,
wherein the information is information indicating the result of measuring the reception quality of the SRS at the other one or more of the plurality of transmission reception points, and
the determination means determines the settings of the SRS, based on a first result of measuring the reception quality of the SRS at the one or more of the plurality of transmission reception points and a second result of measuring the reception quality of the SRS at the other one or more of the plurality of transmission reception points.

6. The network node according to claim 5,
wherein the determination means determines the settings of the SRS such that, when a difference between the first result and the second result exceeds a predetermined value, the SRS corresponding to one or more of the plurality of antennas of the terminal device is transmitted with different time resources from the SRS of another one or more of the plurality of antennas.

7. The network node according to claim 1,
wherein the network node communicates with the terminal device with use of one or more of the plurality of transmission reception points,
another network node different from the network node communicates with the terminal device with use of another one or more of the plurality of transmission reception points different from the one or more transmission reception points,
the network node further comprises:
acquisition means for acquiring a result of measuring a reception quality of the SRS at the one or more of the plurality of transmission reception points; and
transmission means for transmitting information related to the result of measuring the reception quality of the SRS at the one or more of the plurality of transmission reception points to the other network node,
the determination means determines that the SRS corresponding to one or more of the plurality of antennas of the terminal device is to be transmitted with different time resources from the SRS of another one or more of the plurality of antennas, based on the result of measuring the reception quality of the SRS at the one or more of the plurality of transmission reception points, and
the transmission means transmits, as the information, change instruction information for instructing a result of the determination by the determination means to the other network node.

8. A network node in a wireless communication network including the network node which communicates with a terminal device having a plurality of antennas with use of one or more of a plurality of transmission reception points, and another network node that communicates with the terminal device with use of another one or more of the plurality of transmission reception points different from the one or more transmission reception points, the network node comprising:
acquisition means for acquiring a result of measuring, at the one or more of the plurality of transmission reception points, a reception quality of a sounding reference signal (SRS) transmitted from each of the plurality of antennas of the terminal device; and
transmission means for transmitting, to the other network node, information related to the result of measuring the reception quality of the SRS at the one or more of the plurality of transmission reception points, the information being for causing the other network node to determine settings of the SRS including a setting of whether the SRS is to be transmitted with a plurality of sets of resources corresponding to sets of time resources different from each other.

9. A terminal device in a wireless communication network that provides a communication service to the terminal device with use of a plurality of transmission reception points, the terminal device comprising:
a plurality of antennas;
reception means for receiving, from a network node of the wireless communication network, settings of a sounding reference signal (SRS) for measurement at each of the plurality of transmission reception points including a setting of whether the SRS is to be transmitted with a plurality of sets of resources corresponding to sets of time resources different from each other; and
transmission means for transmitting the SRS with use of the plurality of antennas, based on the settings of the SRS.

10. A control method to be executed by a network node in a wireless communication network that provides a communication service to a terminal device having a plurality of antennas with use of a plurality of transmission reception points, the control method comprising:
determining, based on a result of measuring, at the plurality of transmission reception points, a reception quality of a sounding reference signal (SRS) transmitted from each of the plurality of antennas of the terminal device, settings of the SRS including a setting of whether the SRS is to be transmitted with a plurality of sets of resources corresponding to sets of time resources different from each other; and
notifying the settings of the SRS to the terminal device, using one of the plurality of transmission reception points.

11. A control method to be executed by a network node in a wireless communication network including the network node which communicates with a terminal device having a plurality of antennas with use of one or more of a plurality of transmission reception points, and another network node that communicates with the terminal device with use of another one or more of the plurality of transmission reception points different from the one or more transmission reception points, the control method comprising:
acquiring a result of measuring, at the one or more of the plurality of transmission reception points, a reception quality of a sounding reference signal (SRS) transmitted from each of the plurality of antennas of the terminal device; and
transmitting, to the other network node, information related to the result of measuring the reception quality of the SRS at the one or more of the plurality of transmission reception points, the information being for causing the other network node to determine settings of the SRS including a setting of whether the SRS is to be transmitted with a plurality of sets of resources corresponding to sets of time resources different from each other.

12. A control method to be executed by a terminal device in a wireless communication network that provides a communication service to the terminal device which has a plurality of antennas with use of a plurality of transmission reception points, the control method comprising:
receiving, from a network node of the wireless communication network, settings of a sounding reference signal (SRS) for measurement at each of the plurality of transmission reception points including a setting of whether the SRS is to be transmitted with a plurality of sets of resources corresponding to sets of time resources different from each other; and
transmitting the SRS with use of the plurality of antennas, based on the settings of the SRS.

13. A computer program for causing a computer provided in a network node in a wireless communication network that provides a communication service to a terminal device having a plurality of antennas with use of a plurality of transmission reception points to:
determine, based on a result of measuring, at the plurality of transmission reception points, a reception quality of a sounding reference signal (SRS) transmitted from each of the plurality of antennas of the terminal device, settings of the SRS including a setting of whether the SRS is to be transmitted with a plurality of sets of resources corresponding to sets of time resources different from each other; and
notify the settings of the SRS to the terminal device, using one of the plurality of transmission reception points.

14. A computer program for causing a computer provided in a network node in a wireless communication network including the network node which communicates with a terminal device having a plurality of antennas with use of one or more of a plurality of transmission reception points, and another network node that communicates with the terminal device with use of another one or more of the plurality of transmission reception points different from the one or more transmission reception points to:
acquire a result of measuring, at the one or more of the plurality of transmission reception points, a reception quality of a sounding reference signal (SRS) transmitted from each of the plurality of antennas of the terminal device; and
transmit, to the other network node, information related to the result of measuring the reception quality of the SRS at the one or more of the plurality of transmission reception points, the information being for causing the other network node to determine settings of the SRS including a setting of whether the SRS is to be transmitted with a plurality of sets of resources corresponding to sets of time resources different from each other.

15. A computer program for causing a computer provided in a terminal device in a wireless communication network that provides a communication service to the terminal device which has a plurality of antennas with use of a plurality of transmission reception points to:
receive, from a network node of the wireless communication network, settings of a sounding reference signal (SRS) for measurement at each of the plurality of transmission reception points including a setting of whether the SRS is to be transmitted with a plurality of sets of resources corresponding to sets of time resources different from each other; and
transmit the SRS with use of the plurality of antennas, based on the settings of the SRS.
